# EUROPÄISCHE PATENTANMELDUNG

(11) **EP 4 751 896 A1**
(43) Veröffentlichungstag der Anmeldung: **03.06.2026**
(21) Anmeldenummer: 24216550.4
(22) Anmeldetag: 29.11.2024
(51) Int. Cl.: B29C 65/22, B29C 65/00, B29C 35/16

(54) **SCHWEISSWERKZEUG ZUR VERSCHWEISSUNG VON KUNSTSTOFFFOLIEN**

(71) Anmelder: ROPEX Industrie-Elektronik GmbH, 74321 Bietigheim-Bissingen (DE)
(72) Erfinder: Schuller, Manuel, 74321 Bietigheim-Bissingen (DE); Diesse, Lucas, 74321 Bietigheim-Bissingen (DE)
(74) Vertreter: Patentanwälte Magenbauer & Kollegen Partnerschaft mbB

(57) **Zusammenfassung**

Die Erfindung betrifft ein Schweißwerkzeug (1) zur Verschweißung von Kunststofffolien, mit einem Trägerteil (11), das eine mechanische Schnittstelle (12) zur Ankopplung an eine Schweißeinrichtung sowie eine Trägerfläche (13) aufweist, wobei in der Trägerfläche (13) wenigstens eine Ausnehmung (21) ausgebildet ist, die mit einem Fluidkanal (18) im Trägerteil (11) fluidisch kommunizierend verbunden ist, sowie mit einer Heizbandanordnung (51), die auf der Trägerfläche (13) aufliegt und die ein elektrisch leitendes Heizband (55) umfasst, das zwischen einer elektrisch isolierenden Unterlage (52) und einer elektrisch isolierenden Decklage (56) aufgenommen ist, wobei die Unterlage (52) mit einem Durchbruch (57) versehen ist, der die Ausnehmung (21) zumindest bereichsweise überdeckt.

## Beschreibung

Die Erfindung betrifft ein Schweißwerkzeug zur Verschweißung von Kunststofffolien. Derartige Schweißwerkzeuge werden von der Anmelderin unter der Bezeichnung RESISTRON vermarktet und weisen typischerweise eine quaderförmige Schiene aus Metall, die auch als Trägerteil bezeichnet wird, sowie ein auf der Schiene aufliegendes Heizband auf, das mit einer Stromquelle verbunden werden kann, um bei einem Stromfluss durch das Heizband eine Abgabe von Wärme auf eine Kunststofffolie zu ermöglichen, die in Berührkontakt mit dem Heizband steht und mit einer beispielsweise leistenförmig ausgebildeten Gegenlage an das Heizband gepresst wird. Das Heizband weist üblicherweise einen mehrlagigen Aufbau auf, der insbesondere eine elektrisch isolierende Unterlage, ein elektrisch leitendes Heizband sowie eine elektrisch isolierende Decklage umfasst. Abweichende Aufbauten für das Heizband können ebenfalls vorgesehen sein.

Die Aufgabe der Erfindung besteht darin, ein Schweißwerkzeug bereitzustellen, mit dem eine Beschleunigung des Schweißvorgangs verwirklicht werden kann.

Diese Aufgabe wird für ein Schweißwerkzeug zur Verschweißung von Kunststofffolien dadurch gelöst, dass ein Trägerteil, das eine mechanische Schnittstelle zur Ankopplung an eine Schweißeinrichtung sowie eine Trägerfläche aufweist, wobei in der Trägerfläche wenigstens eine Ausnehmung ausgebildet ist, die mit einem Fluidkanal im Trägerteil fluidisch kommunizierend verbunden ist, mit einer Heizbandanordnung versehen ist, die auf der Trägerfläche aufliegt und die ein elektrisch leitendes Heizband umfasst, das zwischen einer elektrisch isolierenden Unterlage und einer elektrisch isolierenden Decklage aufgenommen ist, wobei die Unterlage mit einem Durchbruch versehen ist, der die Ausnehmung zumindest bereichsweise überdeckt.

Die Aufgabe des Trägerteils besteht darin, eine mechanische Abstützung für das auf der Trägerfläche aufliegende Heizband sowie eine Kraftübertragung zwischen der Schweißeinrichtung und der Gegenlage, die an der Schweißeinrichtung angebracht ist, zu ermöglichen. Hierbei sind die miteinander zu verschweißenden Kunststofffolien in einem Schweißspalt aufgenommen, der von dem Heizband und der Gegenlage bestimmt wird und der in seiner Größe einstellbar ist. Bevorzugt ist vorgesehen, dass ein Abstand zwischen dem Heizband und der Gegenlage durch eine lineare Relativbewegung zwischen dem Trägerteil und der Gegenlage eingestellt wird. Besonders bevorzugt ist vorgesehen, dass eine vom Heizband bestimmte Heizebene sowie eine von der Gegenlage bestimmte Andruckebene parallel zueinander ausgerichtet sind und die lineare Relativbewegung zwischen dem Trägerteil und der Gegenlage in einer Raumrichtung vorgenommen wird, die parallel zu einer Flächennormale auf die Heizebene und die Andruckebene erfolgt.

Die Heizbandanordnung kann als Baugruppe betrachtet werden, die auf die Trägerfläche des Trägerteils aufgelegt wird. Hierbei umfasst die Heizbandanordnung eine elektrisch isolierende Unterlage, die für eine elektrische Isolation zwischen dem elektrisch leitenden Heizband und der Trägerfläche ausgebildet ist. Die Unterlage dient zusätzlich als elastischer Puffer zwischen der Trägerfläche und dem elektrisch leitenden Heizband, um beispielsweise Dickenunterschiede in den zu verschweißenden Kunststofffolien ausgleichen zu können. Das elektrisch leitende Heizband wird bei einem bestimmungsgemäßen Gebrauch des Schweißwerkzeugs von einem elektrischen Strom durchflossen und führt aufgrund seines elektrischen Widerstands zu einer Umsetzung von elektrischer Energie in Wärmeenergie, mit der die gewünschte lokale Erwärmung der zuvor speisenden Kunststofffolien hervorgerufen werden kann. Um ein Anhaften der lokal aufgeschmolzenen Kunststofffolie am elektrisch leitenden Heizband zu vermeiden, ist eine Decklage vorgesehen, die das elektrisch leitende Heizband überdeckt und die aus einem hitzefesten Material hergestellt ist, das nur eine geringe, vorzugsweise keine, Anhaftungsneigung gegenüber der Kunststofffolie aufweist.

Abweichend von den bekannten Schweißwerkzeugen, die sowohl in einer ungekühlten als auch in einer flüssigkeitsgekühlten Ausführung erhältlich sind, weist das erfindungsgemäße Schweißwerkzeug ein Trägerteil auf, das an der Trägerfläche mit einer Ausnehmung versehen ist, die fluidisch kommunizierend mit einem Fluidkanal, der im Trägerteil ausgebildet ist, verbunden ist. Im Gegensatz zu bislang bekannten Schweißwerkzeugen, bei denen ein geschlossener Kühlkreislauf unter der Verwendung einer Kühlflüssigkeit, beispielsweise Wasser, vorgesehen ist, ist das erfindungsgemäße Schweißwerkzeug für eine Verlustkühlung konfiguriert, bei der ein Gasstrom, der von einer Fluidquelle, insbesondere einer Druckluftquelle, an den Fluidkanal bereitgestellt wird, durch die Ausnehmung in der Trägerfläche austreten kann. Um ein möglichst widerstandsarmes Austreten des Gasstroms aus der Ausnehmung zu gewährleisten, ist die unmittelbar auf der Trägerfläche aufliegende Unterlage mit einem Durchbruch versehen. Die Unterlage wird dabei derart auf die Ausnehmung in der Trägerfläche aufgelegt, dass eine zumindest teilweise Überdeckung zwischen dem Durchbruch in der Unterlage und der Ausnehmung in der Trägerfläche vorliegt, sodass der Gasstrom auch durch die Unterlage hindurch strömen kann. Mit diesem Gasstrom, der entweder kontinuierlich oder intervallartig an den Fluidkanal im Trägerteil bereitgestellt wird und von dort aus durch die Ausnehmung und den Durchbruch abströmen kann, wird eine Kühlwirkung für das Heizband hervorgerufen. Mit dieser Kühlwirkung, die eine Abkühlung des Heizbands nach Beendigung des Stromflusses durch das Heizband unterstützt, kann die mit Hilfe des Schweißwerkzeugs erzeugte Schweißnaht rasch abgekühlt werden, wodurch sich für aufeinanderfolgende Schweißvorgänge eine kürzere Taktzeit und eine höhere Taktfrequenz erzielen lässt. Rein exemplarisch kann es sich bei der Ausnehmung um eine Bohrung handeln, die zwischen dem Fluidkanal und der Trägerfläche erstreckt ist.

Der Fluidkanal im Trägerteil kann einen einzigen Fluidanschluss aufweisen, der an einer Außenoberfläche des Trägerteils angeordnet ist und beispielsweise zum Ankoppeln eines Fluidschlauchs ausgebildet ist, der sich zwischen der Fluidquelle und dem Trägerteil erstreckt. In diesem Fall ist eine reine Verlustkühlung vorgesehen, bei der ein am Fluidanschluss bereitgestellter Fluidmassenstrom vollständig durch die Ausnehmung und den Durchbruch strömt und aus der Heizbandanordnung austritt. Es können auch mehrere Fluidanschlüsse vorgesehen sein, die alle ausschließlich zur Fluidzufuhr in den Fluidkanal genutzt werden. Alternativ kann sich der Fluidkanal im Trägerteil zwischen einem Eingangsanschluss und einem Ausgangsanschluss erstreckten, die jeweils an einer Außenoberfläche des Trägerteils angeordnet sind. Hierbei kann vorgesehen sein, dass am Eingangsanschluss ein Fluidschlauch angekoppelt werden kann, der mit der Fluidquelle verbunden ist. Ferner kann vorgesehen sein, dass am Eingangsanschluss oder am Ausgangsanschluss eine einstellbare Drossel und/oder am Ausgangsanschluss ein Schalldämpfer angeordnet sind, durch die ein vorgegebener Strömungswiderstand für das Fluid bewirkt wird, sodass ein erster Teil des am Eingangsanschluss bereitgestellte Fluids durch die Ausnehmung in der Trägerfläche in das Heizband abströmt, während ein zweiter Teil des am Eingangsanschluss bereitgestellte Fluids zum Ausgangsanschluss strömt und von dort aus in die Umgebung abgeführt werden kann.

Vorteilhafte Weiterbildungen der Erfindung sind Gegenstand der Unteransprüche.

Zweckmäßig ist es, wenn die Unterlage ein Isolierband aus einem gummielastischen Material und ein Gleitband umfasst, wobei das Gleitband zwischen dem Isolierband und dem Heizband angeordnet ist und wobei der Durchbruch im Isolierband ausgebildet ist und über das Heizband hinausragt. Die Aufgabe des Isolierbands, das einen Bestandteil der Unterlage bildet, besteht in der Gewährleistung einer elektrischen Isolation zwischen dem stromdurchflossen Heizband und dem Trägerteil. Ferner stellt das aus einem gummielastischen Material hergestellte Isolierband eine mechanische Pufferwirkung zum Ausgleich von geometrischen Toleranzen, die insbesondere bei den zu verschweißten Kunststofffolien auftreten können, zur Verfügung. Die Aufgabe des Gleitbands besteht darin, eine Anhaftung des Heizbands am Isolierband zu verhindern, sodass bei der Durchführung des Schweißvorgangs zumindest geringfügige Relativbewegungen zwischen dem Heizband und dem Isolierband in der vom Heizband bestimmten Heizebene ermöglicht werden und damit unerwünschte innere Spannungen im Heizband vermieden werden.

Ferner ist vorgesehen, dass das Isolierband mit dem wenigstens einen Durchbruch versehen ist, der bei einem bestimmungsgemäßen Gebrauch der Heizbandanordnung in der Heizebene seitlich über das Heizband hinausragt, sodass ein Fluidstrom, der ausgehend vom Fluidkanal im Trägerteil durch die Ausnehmung und den Durchbruch strömt, seitlich am Heizband entlang strömen kann und damit die gewünschte Kühlwirkung für das Heizband ermöglicht. In diesem Fall kann rein exemplarisch vorgesehen sein, dass das Gleitband in gleicher Weise streifenförmig ausgebildet ist, wie dies auch für das Heizband der Fall ist und dass das Gleitband nicht oder nur geringfügig seitlich über das Heizband abragt. Hier kann vorgesehen sein, dass das Heizband und das Gleitband den Durchbruch nicht oder nur geringfügig überdecken.

Alternativ kann vorgesehen sein, dass sich der Durchbruch unterhalb des Heizbands und des Gleitbands erstreckt und seitlich über das Heizband und das Gleitband hinausragt, sodass das Heizband beidseitig von einem Fluidstrom, der den Durchbruch durchströmt, umströmt werden kann.

Beispielhaft ist vorgesehen, dass die Trägerfläche rechteckig ausgebildet ist und damit zwei parallel zueinander verlaufende längere Kanten sowie rechtwinklig zu den längeren Kanten ausgerichtete kürzere Kanten aufweist. Vorzugsweise sind die längeren Kanten um einen Faktor 5 bis 100 länger als die kürzeren Kanten. Ein Abstand zwischen den längeren Kanten entspricht der Länge der kürzeren Kanten und wird auch als Breite der Trägerfläche bezeichnet. Eine Längenerstreckung der längeren Kanten wird auch als Länge der Trägerfläche bezeichnet.

Ferner ist vorgesehen, dass das Isolierband die Trägerfläche zumindest nahezu vollständig überdeckt und dass das Heizband nahezu über die gesamte Länge der längeren Kante der Trägerfläche erstreckt ist. Bevorzugt ist vorgesehen, dass eine Erstreckung des Heizbands in Richtung der Breite der Trägerfläche nur einen Bruchteil, beispielsweise 30 Prozent, der Breite der Trägerfläche beträgt.

Je nach Anordnung des Durchbruchs in der Unterlage kann vorgesehen sein, dass das Gleitband und das Heizband den Durchbruch beranden oder benachbart zum Durchbruch angeordnet sind oder den Durchbruch teilweise überdecken.

Vorteilhaft ist es, wenn das Gleitband eine Perforation aufweist, die in zumindest teilweiser Überdeckung mit dem im Isolierband ausgebildeten Durchbruch angeordnet ist. Die Perforation im Gleitband kann als einzelnes Loch oder als Vielzahl von Löchern ausgebildet sein. Bevorzugt ist die Perforation als Vielzahl von Löchern, die in gleicher Teilung längs einer Erstreckungsachse angeordnet sind, ausgebildet. Besonders bevorzugt ist die Erstreckungsachse parallel zur längeren Kante der Trägerfläche ausgerichtet. Eine solche Konfiguration des Gleitbands ist insbesondere dann von Interesse, wenn das Gleitband erheblich breiter als das Heizband ausgebildet ist, wobei der Fluidstrom durch die Perforation im Gleitband hindurchströmen und das Heizband umströmen kann.

Bevorzugt ist vorgesehen, dass das Isolierband aus elektrisch isolierendem Silikon hergestellt ist und/oder dass das Heizband aus Metall, insbesondere aus Edelstahl, hergestellt ist und/oder dass das Gleitband aus einem mit PTFE beschichteten Gewebeband hergestellt ist und/oder dass die Decklage aus einem mit PTFE beschichteten, insbesondere mit einer einseitigen Selbstklebeschicht versehenen, Gewebeband hergestellt ist. Durch die Verwendung von eines Gewebebands mit PTFE-Beschichtung (Polytetrafluorethylen-Beschichtung) für das Gleitband und/oder für die Decklage können unerwünschte Anhaftungen zwischen Heizband und Isolierband und/oder zwischen der Decklage und den zu verschweißenden Kunststofffolien vermieden werden.

Bei einer Weiterbildung der Erfindung ist vorgesehen, dass die Ausnehmung in der Trägerfläche als Nut ausgebildet ist und dass entlang einer Längsachse der Nut eine Vielzahl von, insbesondere quer zur Trägerfläche ausgerichteten, Bohrungen zwischen dem Fluidkanal und der Nut ausgebildet sind. Bevorzugt ist vorgesehen, dass die Nut entlang der Längsachse eine konstante, beispielsweise eine U-förmige oder V-förmige, Profilierung aufweist und dass die Längsachse der Nut parallel zur längeren Kante der Trägerfläche ausgerichtet ist. Um eine möglichst gleichförmige Verteilung der Fluidströme, die über den Fluidkanal an die Nut zur Verfügung gestellt werden sollen, zu gewährleisten, sind entlang der Längsachse eine Vielzahl von Bohrungen zwischen dem Fluidkanal und der Nut ausgebildet. Bevorzugt ist vorgesehen, dass die Bohrungen quer zur Trägerfläche ausgerichtet sind. Besonders bevorzugt ist vorgesehen, dass eine Anordnung der Bohrungen entlang der Längsachse der Nut und/oder die Querschnitte der Bohrungen derart gewählt ist, dass an jeder Stelle der Nut zumindest im Wesentlichen der gleiche Fluidmassenstrom zur Verfügung gestellt wird, um eine lokale Unterkühlung oder Kühlung des Heizbands zu vermeiden. Rein exemplarisch kann vorgesehen sein, dass ein Abstand zwischen benachbarten Bohrungen mit zunehmendem Abstand vom Eingangsanschluss, an dem das Druckbeaufschlagung Fluid zur Verfügung gestellt wird, verringert wird, um den Druckabfall im Fluidkanal über die Länge des Fluidkanals zu berücksichtigen. Ergänzend oder alternativ kann vorgesehen sein, dass die Querschnitte der Bohrungen mit zunehmendem Abstand vom Eingangsanschluss größer werden, um ebenfalls die Druckabfall im Fluidkanal über die Länge des Fluidkanals zu berücksichtigen. Ferner kann beispielsweise vorgesehen sein, dass der Fluidkanal einen erheblich größeren Querschnitt aufweist als die Summe der Querschnitte der Bohrungen quer zur Trägerfläche, um hierdurch eine gleichmäßige Verteilung des Fluidmassenstroms zu gewährleisten. Die Anordnung der Bohrungen kann auf einer Geraden oder auf einer Zick-Zack-Linie oder gemäß einer anderen geometrischen Vorgabe vorgesehen sein. Ergänzend oder alternativ können auch mehrere Nuten mit zugeordneten Bohrungen vorgesehen sein, um eine vorteilhafte Anpassung der Kühlleistung an die Geometrie der Trägerfläche zu ermöglichen.

In weiterer Ausgestaltung der Erfindung ist vorgesehen, dass das Isolierband mit einer Vielzahl von Durchbrüchen versehen ist, die entlang der Längsachse der Nut in einer ersten Teilung angeordnet sind. Vorzugsweise ist die erste Teilung derart gewählt, dass zwischen benachbarten Durchbrüchen im Isolierband noch ausreichend stabile Stege verbleiben, auf denen das Gleitband und das Heizband aufliegen können, um auch im Bereich der Nut, die in der Trägerfläche ausgebildet ist, eine ausreichende mechanische Abstützung gewährleisten zu können.

Zweckmäßig ist es, wenn im Gleitband eine Vielzahl von Perforationen ausgebildet sind, wobei die Perforationen in gleicher Teilung wie die Durchbrüche im Isolierband angeordnet sind. Bei einer derartigen Ausgestaltung der Perforationen wird ein vorteilhafter, geringer Strömungswiderstand gewährleistet, sofern eine vollständige Überdeckung zwischen den Durchbrüchen im Isolierband und den Perforationen im Gleitband vorliegt. Eine solche vollständige Überdeckung kann beispielsweise durch zusätzliche Hilfsmittel wie Positionierstifte im Trägerteil und korrespondierende Positionierbohrungen im Isolierband und im Gleitband erleichtert werden.

Bei einer vorteilhaften Weiterbildung der Erfindung ist vorgesehen, dass die Decklage das Heizband und die Unterlage überdeckt und dass die Decklage abseits des Heizbands mit Austrittsöffnungen versehen ist. Durch die abseits des Heizbands angeordneten Austrittsöffnungen in der Decklage wird vermieden, dass das Heizband in unmittelbaren Kontakt mit den zu verschweißenden Kunststofffolien kommt. Zudem wird hierdurch auch die elektrische Isolationsfunktion, die die Decklage gewährleisten muss, nicht in Frage gestellt. Bevorzugt sind die Austrittsöffnungen an Randbereichen der Trägerfläche, insbesondere entlang der längeren Kanten der Trägerfläche, angeordnet. Hierdurch wird zusätzlich erreicht, dass die durch die Austrittsöffnungen austretenden Fluidströme nicht auf denjenigen Bereich der Kunststofffolien auftreffen, der mit Hilfe des Heizbands verschweißt werden soll und der als Schweißzone bezeichnet werden kann. Vielmehr findet die Kühlung dieser Schweißzone durch das zwischen dem Gleitband und der Decklage strömende Fluid statt, das aus den Durchbrüchen bzw. den Perforationen austritt, das Heizband umströmt und zu den Austrittsöffnungen abströmt.

Bevorzugt ist vorgesehen, dass die Trägerfläche rechteckig ausgebildet ist und dass an längste Kanten der Trägerfläche angrenzende Seitenflächen des Trägerteils bereichsweise von der Decklage bedeckt sind, wobei die Austrittsöffnungen benachbart zur längsten Kante der Trägerfläche angeordnet sind.

Vorteilhaft ist es, wenn bei einer Projektion der Durchbrüche und der Perforationen und der Austrittsöffnungen eine zumindest teilweise, insbesondere vollständige Überdeckung der der Durchbrüche und der Perforationen vorliegt und wenn die Austrittsöffnungen überdeckungsfrei und abseits der Durchbrüche und der Perforationen angeordnet sind. Durch die teilweise, insbesondere vollständige, Überdeckung der Durchbrüche und der Perforationen wird eine widerstandsarme Fluidströmung durch die Unterlage, die typischerweise aus dem Isolierband und dem Gleitband gebildet wird, gewährleistet. Durch die Anordnung der Austrittöffnungen abseits der Durchbrüche und der Perforationen soll erreicht werden, dass das aus den Perforationen ausströmende Fluid in einem intensiven Kontakt mit dem Heizband gelangt, um einen effizienten Wärmeabtransport vom Heizband zu erzielen, bevor das Fluid durch die Austrittsöffnungen in die Umgebung des Schweißwerkzeugs ausströmt.

In weiterer Ausgestaltung der Erfindung ist vorgesehen, dass ein Abstand der voneinander abgewandten Seitenflächen des Trägerteils wenigstens einer doppelten Breite des Heizbands entspricht und dass das Heizband jeweils einen gleichen Abstand zu den beiden Seitenflächen aufweist.

Vorzugsweise ist vorgesehen, dass das Gleitband mit dem darauf aufliegenden Heizband zusammen mit der Decklage zwei spiegelsymmetrisch zueinander ausgerichtete Kühlkanäle bildet, die für einen Gasstrom zwischen der Ausnehmung im Trägerteil und den Austrittsöffnungen ausgebildet sind. Durch diese Kühlkanäle wird das Fluid, das aus den Perforationen im Gleitband ausströmt, am Heizband entlang bis zu den Austrittöffnungen geführt.

Eine vorteilhafte Ausführungsform der Erfindung ist in der Zeichnung dargestellt. Hierbei zeigt:
- Figur 1: eine rein schematische perspektivische Explosionsdarstellung eines erfindungsgemäßen Schweißwerkzeugs, und
- Figur 2: eine rein schematische Querschnittsdarstellung des Schweißwerkzeugs gemäß der Figur 1.

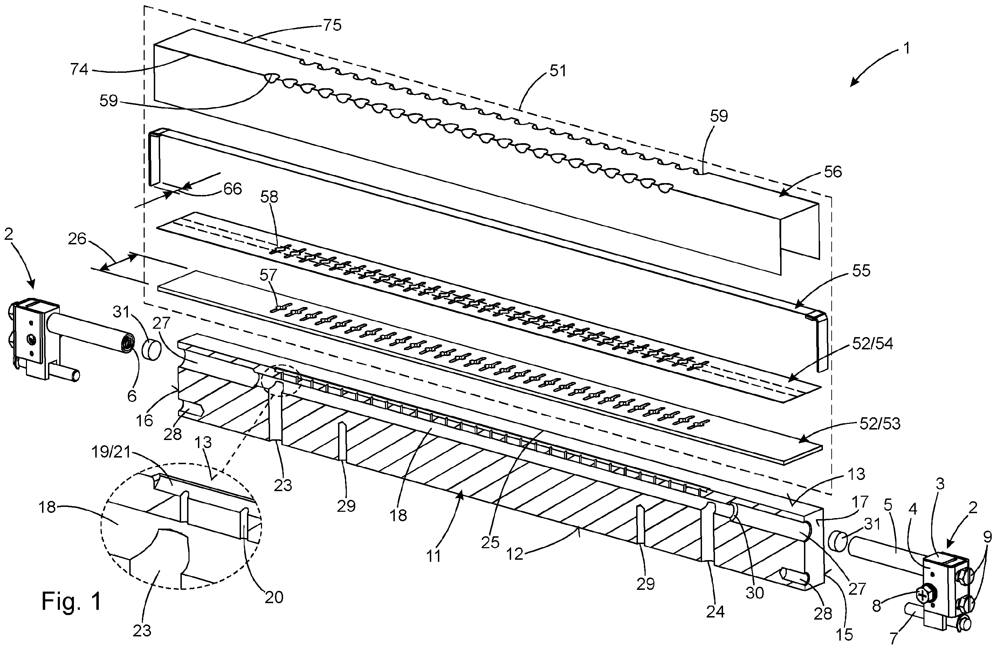

Aus der Explosionsdarstellung der Figur 1 gehen die wesentlichen Komponenten der dort gezeigten Ausführungsform eines Schweißwerkzeugs 1 hervor. Jede dieser Komponenten ist nur rein exemplarisch zu verstehen und kann durch Modifikationen auch in anderer Weise verwirklicht werden. Das in der Figur 1 gezeigte Schweißwerkzeug 1 umfasst zwei Spannköpfe 2, ein Trägerteil 11 und eine Heizbandanordnung 51, das nach Montage dieser Komponenten zur Verwendung in einer nicht dargestellten Schweißvorrichtung vorgesehen ist.

Das in einer Schnittdarstellung gezeigte Trägerteil 11 ist rein exemplarisch quaderförmig ausgebildet und aus einem metallischen Werkstoff, beispielsweise Edelstahl oder Aluminium, hergestellt. An einer rein exemplarisch eben ausgebildeten Unterseite 12 des Trägerteils 11, die auch als Schnittstelle für eine Befestigung des Schweißwerkzeugs 1 an einer nicht dargestellten Schweißvorrichtung genutzt werden kann, sind rein exemplarisch zwei Gewindebohrungen 29 vorgesehen, mit denen das Schweißwerkzeug 1 an einer entsprechenden, nicht dargestellten Aufnahme festgelegt werden kann.

Ferner sind an der Unterseite 12 jeweils beabstandet zu den Gewindebohrungen 29 eine erste Fluidanschlussbohrung 23 und eine zweite Fluidanschlussbohrung 24 vorgesehen, über die beispielsweise eine Zufuhr von Druckluft in einen Fluidkanal 18, der das Trägerteil 11 durchsetzt, erfolgen kann. Wie der Darstellung der Figur 1 entnommen werden kann, erstreckt sich der Fluidkanal 18 parallel zur einer längeren Kante 25 des Trägerteils 11, die auch als längste Kante bezeichnet werden kann, als Durchgangsbohrung von einer ersten Stirnfläche 16 des Trägerteils 11 bis zu einer zweiten Stirnfläche 17 des Trägerteils 11. Der Fluidkanal 18 ist jeweils ausgehend von der ersten Stirnfläche 16 bzw. der zweiten Stirnfläche 17 als Federbohrung 27 ausgebildet, die zur Aufnahme einer Federhülse 5 des jeweiligen Spannkopfs 2 sowie eines jeweils zugeordneten Dichtstopfens 31 vorgesehen ist. Abseits der Federbohrungen 27 weist der Fluidkanal 18 einen gegenüber den Federbohrungen 27 reduzierten Durchmesser auf.

Ausgehend vom Fluidkanal 18 erstrecken sich in einer Raumrichtung, die quer zur Unterseite 12 und quer zu einer parallel zur Unterseite 12 ausgerichteten Oberseite 13 orientiert ist, eine Vielzahl von Bohrungen 20, die für eine fluidisch kommunizierende Verbindung zwischen dem Fluidkanal 18 und einer Ausnehmung 19 in der auch als Trägerfläche 13 bezeichneten Oberseite des Trägerteils 11 dienen. Rein exemplarisch ist vorgesehen, dass die Bohrungen 20 jeweils kreiszylindrisch ausgebildet und parallel zur längeren Kante 25 der Trägerfläche 13 in gleicher Teilung angeordnet sind.

Zwischen der Unterseite 12 und der Trägerfläche 13 erstrecken sich jeweils eben ausgebildete Seitenflächen 14, 15 sowie Stirnflächen 16 und 17, die jeweils rechtwinklig zueinander ausgerichtet sind.

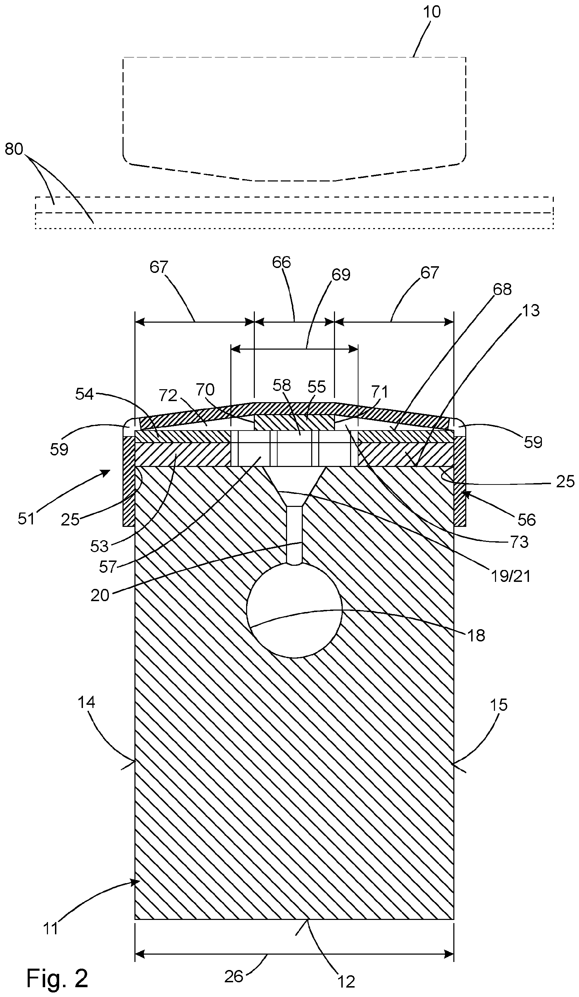

Wie der Darstellung der Figur 2 entnommen werden kann, weist die als Nut 21 ausgebildete Ausnehmung 19 eine im wesentlichen U-förmige Profilierung auf, die rein exemplarisch über die gesamte Länge der Nut 21 konstant ist.

Ausgehend von der ersten Stirnfläche 16 sowie von der zweiten Stirnfläche 17 erstrecken sich jeweils parallel zum Fluidkanal 18 ausgerichtete und als Sacklöcher ausgebildete Führungsbohrungen 28, die zusammen mit den Federbohrungen 27 für eine formschlüssige Festlegung der Spannköpfe 2 in Raumrichtungen quer zur längeren Kante 25 dienen.

Beispielhaft ist vorgesehen, dass jeder der Spannköpfe 2 einen quaderförmigen Grundkörper 3 aufweist, der mit einer Federhülse 5 sowie mit einem Führungsstift 7 versehen ist, wobei die Federhülse 5 und der Führungsstift 7 parallel zueinander ausgerichtet sind. In der jeweiligen Federhülse 5 ist eine Feder 6 angeordnet, die in einer nicht dargestellten Entspannungsposition axial über die Federhülse 5 abragt und zur Abstützung an einem Dichtstopfen 31 vorgesehen ist, der an einem Ringbund 30 abgestützt ist und der den Fluidkanal 27 abdichtet. Der Ringbund 30 ergibt sich aufgrund des Durchmesserunterschieds zwischen der Federbohrung 27 und dem übrigen Fluidkanal 18. Mit diesen Federn 6 kann das an den jeweiligen Spannköpfen 2 eingespannte Heizband 55 dauerhaft unter einer vordefinierten Vorspannung gehalten werden. Für die Festlegung des Heizbands 55 am jeweiligen Spannkopf 2 umfasst der Spannkopf 2 eine Spannklammer 4, die mit Klemmschrauben 9 versehen ist. Mit Hilfe der Klemmschrauben 9 kann das nachstehend näher beschriebene Heizband 55 am jeweiligen Spannkopf 2 festgelegt werden. An der Spannklammer 8 ist ferner eine Befestigungsschraube 8 angebracht, die für eine Anbringung eines nicht dargestellten elektrischen Versorgungskabels vorgesehen ist.

Das aus einem elektrisch leitenden Werkstoff, vorzugsweise einem metallischen Werkstoff, insbesondere Edelstahl, hergestellte Heizband 55 weist eine Längenerstreckung auf, die größer als die längste Kante 25 des Trägerteils 11 gewählt ist und ist jeweils endseitig um 90 Grad abgeknickt, wobei die abgeknickten Abschnitte des Heizbands 55 für die Festlegung an den jeweiligen Spannköpfen 2 dienen. Eine Breite 66 des Heizbands 55 beträgt rein exemplarisch ungefähr 30 Prozent einer Erstreckung einer kürzeren Kante 26 der Trägerfläche 13. Damit weist das Heizband 55 einen Abstand 67 von der jeweils benachbarten längsten Kante 25 auf, der etwas mehr als die Breite 66 des Heizbands 55 beträgt.

Zwischen dem Heizband 55 und der Trägerfläche 13 ist eine Unterlage 52 angeordnet, die rein exemplarisch ein Isolierband 53 sowie ein Gleitband 54 umfasst. Beispielhaft ist vorgesehen, dass das, insbesondere aus Silikon hergestellte, Isolierband 53 gummielastische Eigenschaften aufweist, um einen gewissen Ausgleich von geometrischen Abweichungen, die die nicht dargestellte, mit Hilfe des Schweißwerkzeugs 1 und einer nur in der Figur 2 symbolisch dargestellten Gegenlage 10 zu verschweißenden Kunststofffolien 80 aufweisen können, auszugleichen. Die Aufgabe des auf dem Isolierband 53 aufliegenden und an das Heizband 55 angrenzenden Gleitbands 54 besteht darin, geringfügige Ausgleichsbewegungen des Heizbands 55 in einer Bewegungsebene 68, die identisch mit der Oberseite des Gleitbands 54 ist, zu ermöglichen.

Um einen Fluidstrom zur Kühlung des Heizbands 55 zu ermöglichen, ist das Isolierband 53 mit einer Vielzahl von Durchbrüchen 57 versehen, die parallel zur längsten Kante 25 der Trägerfläche 13 in gleicher Teilung angeordnet sind. Dabei weisen die Durchbrüche 57 in einer Raumrichtung, die quer zur längsten Kante 25 ausgerichtet ist, eine Erstreckung 69 auf, die größer als die Breite 66 des Heizbands 55 ist. Um eine möglichst ungestörte Fluidströmung auch durch das Gleitband 54 zu ermöglichen ist das Gleitband 54 mit einer Vielzahl von Perforationen 58 versehen, die deckungsgleich mit den Durchbrüchen 57 im Isolierband 53 ausgebildet und angeordnet sind.

Wie der rein schematischen Darstellung der Figur 2 entnommen werden kann, werden durch das Gleitband 54, das Heizband 55 und die Decklage 56, die das Heizband 55 überdeckt, zwei Kühlkanäle 72, 73 mit jeweils dreieckigen Querschnitt ausgebildet. Jede der Kühlkanäle 72, 73 grenzt unmittelbar an eine erste Seitenfläche 70 bzw. eine zweite Seitenfläche 71 des Heizbands 55 an. Hieraus resultiert, dass über den Fluidkanal 18, die Bohrungen 20, die Nut 21, die Durchbrüche 57 und die Perforationen 58 bereitgestelltes Fluid an den Seitenflächen 70, 71 des Heizbands 55 vorbeiströmen muss, bevor das Fluid durch Austrittsöffnungen 59 in der Decklage 56 in die Umgebung abströmen kann. Hierdurch wird die gewünschte Kühlwirkung für das Heizband 55 durch das strömende Fluid gewährleistet.

Um eine gezielte Lenkung der Fluidströme aus den beiden Kühlkanälen 72, 73 zu den Austrittöffnungen 59 der Decklage 56 zu gewährleisten, überdeckt die Decklage 56 nicht nur das Heizband 55 und die aus Isolierband 53 und Gleitband 54 gebildete Unterlage 52, sondern auch jeweils bereichsweise die Seitenflächen 14, 15 des Trägerteils 11. Hierzu ist vorgesehen, dass die aus einer PTFE-Folie oder einem gleichwertigen Material hergestellte Decklage zumindest im Wesentlichen U-förmig profiliert ist und dass die Austrittsöffnungen 59 jeweils entlang von Knicklinien 74, 75 angeordnet sind.

## Patentansprüche

1. Schweißwerkzeug (1) zur Verschweißung von Kunststofffolien, mit einem Trägerteil (11), das eine mechanische Schnittstelle (12) zur Ankopplung an eine Schweißeinrichtung sowie eine Trägerfläche (13) aufweist, wobei in der Trägerfläche (13) wenigstens eine Ausnehmung (21) ausgebildet ist, die mit einem Fluidkanal (18) im Trägerteil (11) fluidisch kommunizierend verbunden ist, sowie mit einer Heizbandanordnung (51), die auf der Trägerfläche (13) aufliegt und die ein elektrisch leitendes Heizband (55) umfasst, das zwischen einer elektrisch isolierenden Unterlage (52) und einer elektrisch isolierenden Decklage (56) aufgenommen ist, wobei die Unterlage (52) mit einem Durchbruch (57) versehen ist, der die Ausnehmung (21) zumindest bereichsweise überdeckt.

2. Schweißwerkzeug (1) nach Anspruch 1, **dadurch gekennzeichnet, dass** die Unterlage (52) ein Isolierband (53) aus einem gummielastischen Material und ein Gleitband (54) umfasst, wobei das Gleitband (54) zwischen dem Isolierband (53) und dem Heizband (55) angeordnet ist und wobei der Durchbruch (57) im Isolierband (53) ausgebildet ist und über das Heizband (55) hinausragt.

3. Schweißwerkzeug (1) nach Anspruch 2, **dadurch gekennzeichnet, dass** das Gleitband (54) eine Perforation (58) aufweist, die in zumindest teilweiser Überdeckung mit dem im Isolierband (53) ausgebildeten Durchbruch (57) angeordnet ist.

4. Schweißwerkzeug (1) nach einem der vorhergehenden Ansprüche, **dadurch gekennzeichnet, dass** das Isolierband (53) aus elektrisch isolierendem Silikon hergestellt ist und/oder dass das Heizband (55) aus Metall, insbesondere aus Edelstahl, hergestellt ist und/oder dass das Gleitband (54) als PTFE-Gewebeband ausgebildet ist und/oder dass die Decklage (56) als PTFE-Gewebeband ausgebildet ist.

5. Schweißwerkzeug (1) nach einem der vorhergehenden Ansprüche, **dadurch gekennzeichnet, dass** die Ausnehmung (21) in der Trägerfläche (13) als Nut ausgebildet ist und dass entlang einer Längsachse (22) der Nut eine Vielzahl von, insbesondere quer zur Trägerfläche (13) ausgerichteten, Bohrungen (20) zwischen dem Fluidkanal (18) und der Nut ausgebildet sind.

6. Schweißwerkzeug (1) nach Anspruch 5, **dadurch gekennzeichnet, dass** das Isolierband (53) mit einer Vielzahl von Durchbrüchen (47) versehen ist, die entlang der Längsachse (22) der Nut in einer ersten Teilung angeordnet sind.

7. Schweißwerkzeug (1) nach Anspruch 6, **dadurch gekennzeichnet, dass** im Gleitband (54) eine Vielzahl von Perforationen (58) ausgebildet sind, wobei die Perforationen (58) in gleicher Teilung wie die Durchbrüche (57) im Isolierband (53) angeordnet sind.

8. Schweißwerkzeug (1) nach einem der vorhergehenden Ansprüche, **dadurch gekennzeichnet, dass** die Decklage (56) das Heizband (55) und die Unterlage (52) überdeckt und dass die Decklage (56) abseits des Heizbands (55) mit Austrittsöffnungen (59) versehen ist.

9. Schweißwerkzeug (1) nach Anspruch 8, **dadurch gekennzeichnet, dass** die Trägerfläche (13) rechteckig ausgebildet ist und dass an längste Kanten (25) der Trägerfläche (13) angrenzende Seitenflächen (14, 15) des Trägerteils (11) bereichsweise von der Decklage (56) bedeckt sind, wobei die Austrittsöffnungen (59) benachbart zur längsten Kante (25) der Trägerfläche (13) angeordnet sind.

10. Schweißwerkzeug (1) nach Anspruch 9, **dadurch gekennzeichnet, dass** bei einer Projektion der Durchbrüche (57) und der Perforationen (58) und der Austrittsöffnungen (59) eine zumindest teilweise, insbesondere vollständige Überdeckung der der Durchbrüche (57) und der Perforationen (58) vorliegt und die Austrittsöffnungen (59) überdeckungsfrei und abseits der Durchbrüche (57) und der Perforationen (58) angeordnet sind.

11. Schweißwerkzeug (1) nach einem der Ansprüche 9 oder 10, **dadurch gekennzeichnet, dass** ein Abstand (67) der voneinander abgewandten Seitenflächen (14, 15) des Trägerteils (11) wenigstens einer doppelten Breite (66) des Heizbands (55) entspricht und dass das Heizband (55) jeweils einen gleichen Abstand zu den beiden Seitenflächen (14, 15) aufweist.

12. Schweißwerkzeug (1) nach Anspruch 1, **dadurch gekennzeichnet, dass** das Gleitband (54) mit dem darauf aufliegenden Heizband (55) zusammen mit der Decklage (56) zwei spiegelsymmetrisch zueinander ausgerichtete Kühlkanäle (72, 73) bildet, die für einen Gasstrom zwischen der Ausnehmung (21) im Trägerteil (11) und den Austrittsöffnungen (59) ausgebildet sind.
